# EUROPEAN PATENT APPLICATION

(11) **EP 4 837 943 A1**
(43) Date of publication of application: **11.11.2026**
(21) Application number: 24930439.5
(22) Date of filing: 31.10.2024
(51) Int. Cl.: C09J 151/00

(54) **WATER-BASED POSITIVE ELECTRODE EDGE COATING ADHESIVE AND USE THEREOF, AND POSITIVE ELECTRODE SHEET EDGE COATING SLURRY**

(30) Priority: 18.03.2024 CN 202410304506
(71) Applicant: Meishan Indigo Technology Co., Ltd., Meishan, Sichuan 620861 (CN)
(72) Inventor: TAO, Wei, Sichuan 620861 (CN); LI, Jun, Sichuan 620861 (CN); GAO, Jiandong, Sichuan 620861 (CN); WANG, Lu, Sichuan 620861 (CN); LI, Rengui, Sichuan 620861 (CN); ZHANG, Xiaozheng, Sichuan 620861 (CN); ZHANG, Junru, Sichuan 620861 (CN)
(74) Representative: MacLachlan IP Limited
(86) International application number: PCT/CN2024/128779
(87) International publication number: WO 2025/194781

(57) **Abstract**

The present invention relates to a water-based positive electrode edge coating adhesive and a use thereof, and a positive electrode plate edge coating slurry, belonging to the technical field of battery binders. The technical problem to be solved by the present invention is to provide a water-based positive electrode edge coating adhesive. The water-based positive electrode edge coating adhesive includes a graft polymer. The graft polymer has an acrylic polymer as a main chain and is grafted with a polymer latex particle, and the polymer latex particle has a weight percentage of 20% to 80% in the graft polymer. Polymerization monomers of the acrylic polymer include an acrylic monomer, an acrylamide monomer, and a hydroxyalkyl acrylate monomer; and polymerization monomers of the polymer latex particle include a crosslinking monomer and a double-bonded monomer. The water-based positive electrode edge coating adhesive of the present invention can be used as an edge coating adhesive for positive electrode plates, and has good adhesion to aluminum foil. The electrode plate does not peel off when pulled with an adhesive tape, has a certain toughness, and has no foil exposure after 180° folding. Moreover, the adhesive of the present invention is not prone to peeling off after wiping following electrolyte immersion.

## Description

### CROSS-REFERENCE TO RELATED APPLICATIONS

This invention claims the benefit of and priority to Chinese Patent Application No. CN2024103045065, filed on March 18, 2024, which is hereby incorporated by reference in its entirety for all purposes.

### TECHNICAL FIELD

The present invention relates to a water-based positive electrode edge coating adhesive and a use thereof, and a positive electrode plate edge coating slurry, belonging to the technical field of battery binders.

### BACKGROUND

With the development of the new energy industry, research on lithium battery technology has become a current hot topic. While pursuing high energy density and long cycle life, the safety performance of lithium batteries has also become a major focus of attention. To this end, some researchers have developed a positive electrode plate edge coating technology. This technology coats an economical insulating material on the edge of the positive electrode plate, which not only reduces economic losses but also provides a safety function. In addition to reducing aluminum-negative electrode material short circuits, it can also reduce die-cutting burrs and mitigate the risk of separator thermal shrinkage caused by heat generation at the tab root. At present, positive electrode edge coating materials are mainly composed of boehmite and PVDF. However, the binder currently used in positive electrode edge coating materials is mainly PVDF adhesive solution. With the continuous rise in PVDF prices, the cost of edge coating materials is also increasing day by day. Moreover, since the positive electrode material also uses PVDF adhesive solution as a binder, cross-contamination between the positive electrode material and the edge coating material at the junction is prone to occur, resulting in poor process quality.

In addition, conventional coating processes require harsh processing conditions, incur high NMP solvent costs, use a solvent that is difficult to recycle, and pose certain toxicity issues. These factors have led researchers to consider a coating method that is environmentally friendly and low-cost, using water as the solvent-water-based coating. Water is cheaper than NMP, safer, more environmentally friendly, and does not require harsh processing conditions for electrode preparation, further simplifying the manufacturing process and reducing costs.

### SUMMARY

In view of the above drawbacks, the technical problem to be solved by the present invention is to provide a water-based positive electrode edge coating adhesive.

The present invention provides a water-based positive electrode edge coating adhesive, comprising a graft polymer. The graft polymer has an acrylic polymer as a main chain and is grafted with a polymer latex particle, and the polymer latex particle has a weight percentage of 20% to 80% in the graft polymer. Polymerization monomers of the acrylic polymer include an acrylic monomer, an acrylamide monomer, and a hydroxyalkyl acrylate monomer; and polymerization monomers of the polymer latex particle comprise a crosslinking monomer and a double-bonded monomer, wherein the double-bonded monomer comprises at least one of an alkyl (meth)acrylate, styrene, p-fluorostyrene, methylstyrene, m-fluorostyrene, o-fluorostyrene, p-methoxystyrene, o-methylstyrene, p-methylstyrene, acrylonitrile, and methacrylonitrile.

In some specific embodiments, the polymer latex particle has the weight percentage of 20% to 50% in the graft polymer.

In some specific examples, the polymer latex particle has the weight percentage of 30% in the graft polymer.

In some specific embodiments, the acrylic monomer comprises at least one of acrylic acid, methacrylic acid, allyloxy-hydroxypropyl sulfonic acid, vinyl sulfonic acid, 2-propenylamino-2-methylpropanesulfonic acid, allyl sulfonic acid, methallyl sulfonic acid, itaconic acid, and maleic acid;
the acrylamide monomer comprises at least one of acrylamide, methacrylamide, N-methylacrylamide, N-ethylacrylamide, N,N-dimethylacrylamide, N,N-diethylacrylamide, 2-methylacrylamide, N-hydroxymethylacrylamide, N-hydroxyethylacrylamide, and N-hydroxypropylacrylamide;
the hydroxyalkyl acrylate monomer comprises at least one of hydroxyethyl acrylate, hydroxypropyl acrylate, hydroxyethyl methacrylate, hydroxypropyl methacrylate, 2-hydroxy-3-phenoxypropyl acrylate, 3-(4-hydroxyphenoxy)propyl acrylate, 3-(perfluoro-3-methylbutyl)-2-hydroxypropyl acrylate, and 3-perfluorooctyl-2-hydroxypropyl acrylate;
the crosslinking monomer comprises at least one of ethylene glycol dimethacrylate, ethylene glycol diacrylate, allyl methacrylate, allyl acrylate, N,N-methylenebisacrylamide, and N,N'-methylenebismethacrylamide;
the alkyl (meth)acrylate comprises at least one of n-butyl acrylate, n-butyl methacrylate, n-octyl acrylate, iso-octyl acrylate, lauryl methacrylate, lauryl acrylate, stearyl methacrylate, stearyl acrylate, methyl acrylate, ethyl acrylate, n-butyl acrylate, tert-butyl acrylate, 2-ethylhexyl acrylate, cyclohexyl acrylate, isobornyl acrylate, vinyl acetate, methyl methacrylate, ethyl methacrylate, n-butyl methacrylate, 2-ethylhexyl methacrylate, cyclohexyl methacrylate, isobornyl methacrylate, epoxypropyl methacrylate, and glycidyl methacrylate.

In one embodiment of the present invention, a weight ratio of the acrylic monomer, the acrylamide monomer, and the hydroxyalkyl acrylate monomer is 15-70:1-10:10-30. In a specific embodiment of the present invention, the weight ratio of the acrylic monomer, the acrylamide monomer, and the hydroxyalkyl acrylate monomer is 30-70:1-10:10-20. In a specific example, the weight ratio of the acrylic monomer, the acrylamide monomer, and the hydroxyalkyl acrylate monomer is 57:3:15.

In a specific embodiment of the present invention, the water-based positive electrode edge coating adhesive of the present invention further comprises a solvent. Preferably, the solvent is water.

In a specific embodiment of the present invention, the water-based positive electrode edge coating adhesive has a viscosity of 80 to 10,000 cp, measured at 25°C on a solid content of 30%.

The present invention also provides the use of the water-based positive electrode edge coating adhesive according to the present invention in positive electrode plate edge coating.

The water-based positive electrode edge coating adhesive of the present invention can be used in positive electrode plate edge coating, has good adhesion to aluminum foil, and a certain toughness, and has no foil exposure after 180° folding. Moreover, the adhesive of the present invention is not prone to peeling off after wiping following electrolyte immersion.

The present invention also provides a positive electrode plate edge coating slurry.

The positive electrode plate edge coating slurry of the present invention comprises a ceramic material and a binder, wherein the binder is the water-based positive electrode edge coating adhesive according to the present invention.

In some specific embodiments, the ceramic material is selected from at least one of alumina, boehmite, magnesium oxide, and magnesium hydroxide.

Compared with the prior art, the present invention has the following beneficial effects:

The water-based positive electrode edge coating adhesive of the present invention can be used as an edge coating adhesive for positive electrode plates, and has good adhesion to aluminum foil. The electrode plate does not peel off when pulled with an adhesive tape, has a certain toughness, and has no foil exposure after 180° folding. Moreover, the adhesive of the present invention is not prone to peeling off after wiping following electrolyte immersion.

The water-based positive electrode edge coating adhesive of the present invention has a simple preparation method, is environmentally friendly, and is suitable for industrial production.

### DETAILED DESCRIPTION OF EMBODIMENTS

The present invention provides a water-based positive electrode edge coating adhesive, comprising a graft polymer. The graft polymer has an acrylic polymer as a main chain and is grafted with a polymer latex particle, and the polymer latex particle has a weight percentage of 20% to 80% in the graft polymer. Polymerization monomers of the acrylic polymer include an acrylic monomer, an acrylamide monomer, and a hydroxyalkyl acrylate monomer; and polymerization monomers of the polymer latex particle comprise a crosslinking monomer and a double-bonded monomer, wherein the double-bonded monomer comprises at least one of an alkyl (meth)acrylate, styrene, p-fluorostyrene, methylstyrene, m-fluorostyrene, o-fluorostyrene, p-methoxystyrene, o-methylstyrene, p-methylstyrene, acrylonitrile, and methacrylonitrile.

The water-based positive electrode edge coating adhesive of the present invention has an acrylic polymer as a main chain and is grafted with a certain amount of polymer latex particles. It can be used as an edge coating adhesive for positive electrode plates, has good adhesion to aluminum foil, and a certain toughness, withstands 180° folding, and exhibits resistance to electrolyte corrosion (the adhesive of the present invention is not prone to peeling off after wiping following electrolyte immersion), and high wet adhesion strength.

In the present invention, the hydroxyalkyl acrylate monomer contained in the polymer having an acrylic polymer as a main chain exhibits excellent dispersing and bonding properties toward boehmite.

In the present invention, the weight percentage of the polymer latex particle in the graft polymer is critical. In one embodiment of the present invention, the polymer latex particle has a weight percentage of 20% to 80% in the graft polymer. If the proportion of the polymer latex particle is too high or too low, the edge coating performance will be affected.

In some specific embodiments, the polymer latex particle has the weight percentage of 20% to 50% in the graft polymer.

In some specific examples, the polymer latex particle has the weight percentage of 20%, 25%, 30%, 35%, 40%, 45%, or 50% in the graft polymer.

The graft polymer of the present invention is the adhesive component in the water-based positive electrode edge coating adhesive. The graft polymer has an acrylic polymer as a main chain and is grafted with a polymer latex particle.

Polymerization monomers of the acrylic polymer of the present invention comprise an acrylic monomer, an acrylamide monomer, and a hydroxyalkyl acrylate monomer.

Among them, the acrylic monomer is a compound containing a double bond and a carboxyl group, including but not limited to at least one of acrylic acid, methacrylic acid, allyloxy-hydroxypropyl sulfonic acid, vinyl sulfonic acid, 2-propenylamino-2-methylpropanesulfonic acid, allyl sulfonic acid, methallyl sulfonic acid, itaconic acid, and maleic acid.

The acrylamide monomer is a compound containing a double bond and an amide group, including but not limited to at least one of acrylamide, methacrylamide, N-methylacrylamide, N-ethylacrylamide, N,N-dimethylacrylamide, N,N-diethylacrylamide, 2-methylacrylamide, N-hydroxymethylacrylamide, N-hydroxyethylacrylamide, and N-hydroxypropylacrylamide.

The hydroxyalkyl acrylate monomer is a compound containing a double bond and a hydroxyl group, including but not limited to at least one of hydroxyethyl acrylate, hydroxypropyl acrylate, hydroxyethyl methacrylate, hydroxypropyl methacrylate, 2-hydroxy-3-phenoxypropyl acrylate, 3-(4-hydroxyphenoxy)propyl acrylate, 3-(perfluoro-3-methylbutyl)-2-hydroxypropyl acrylate, and 3-perfluorooctyl-2-hydroxypropyl acrylate.

The proportion of the acrylic monomer, the acrylamide monomer, and the hydroxyalkyl acrylate monomer can be in a conventional ratio used in the art. In one embodiment of the present invention, a weight ratio of the acrylic monomer, the acrylamide monomer, and the hydroxyalkyl acrylate monomer is 15-70:1-10:10-30. In a specific embodiment of the present invention, the weight ratio of the acrylic monomer, the acrylamide monomer, and the hydroxyalkyl acrylate monomer is 30-70:1-10:10-20. In a specific example, the weight ratio of the acrylic monomer, the acrylamide monomer, and the hydroxyalkyl acrylate monomer is 57:3:15.

The polymer latex particle is a fine particle formed during the emulsion polymerization process. These particles are formed from the polymerization monomers via free radical polymerization, ionic polymerization, or the like. The polymerization monomers of the polymer latex particle can be hydrophobic monomers containing double bonds commonly used in the art. In one embodiment of the present invention, the polymerization monomers of the polymer latex particle comprise a crosslinking monomer and a double-bonded monomer.

The crosslinking monomer contains at least two double bonds, including but not limited to at least one of ethylene glycol dimethacrylate, ethylene glycol diacrylate, allyl methacrylate, allyl acrylate, N,N-methylenebisacrylamide, and N,N'-methylenebismethacrylamide.

The double-bonded monomer comprises at least one of an alkyl (meth)acrylate, styrene, p-fluorostyrene, methylstyrene, m-fluorostyrene, o-fluorostyrene, p-methoxystyrene, o-methylstyrene, p-methylstyrene, acrylonitrile, and methacrylonitrile.

The alkyl (meth)acrylate is a substance obtained by an esterification reaction of acrylic acid or methacrylic acid with an alcohol, including but not limited to at least one of n-butyl acrylate, n-butyl methacrylate, n-octyl acrylate, iso-octyl acrylate, lauryl methacrylate, lauryl acrylate, stearyl methacrylate, stearyl acrylate, methyl acrylate, ethyl acrylate, n-butyl acrylate, tert-butyl acrylate, 2-ethylhexyl acrylate, cyclohexyl acrylate, isobornyl acrylate, vinyl acetate, methyl methacrylate, ethyl methacrylate, n-butyl methacrylate, 2-ethylhexyl methacrylate, cyclohexyl methacrylate, isobornyl methacrylate, epoxypropyl methacrylate, and glycidyl methacrylate.

The water-based positive electrode edge coating adhesive of the present invention further comprises a solvent. Preferably, the solvent is water.

In a specific embodiment of the present invention, the water-based positive electrode edge coating adhesive has a viscosity of 80 to 10,000 cp, measured at 25°C on a solid content of 30%.

The viscosity as referred to in the present invention is dynamic viscosity, measured using a Brookfield viscometer at a controlled temperature of 25°C, with a rotor model of 62# and a rotational speed of 30 r/min.

The water-based positive electrode edge coating adhesive of the present invention can be prepared by conventional methods. In a specific embodiment of the present invention, the preparation method of the water-based positive electrode edge coating adhesive comprises the following steps:
Mixing the polymerization monomers of the acrylic polymer to form a dropping liquid A; mixing the polymerization monomers of polymer latex particles, an emulsifier, and water to form a dropping liquid B;
using water as the reaction system; under a protective atmosphere, heating the reaction system to a reaction temperature, then adding an initiator, adding the dropping liquid A, reacting for 1 to 10 hours, then adding the dropping liquid B, and continuing the reaction until completion, to obtain the water-based positive electrode edge coating adhesive.

In this method, the initiator may be a conventional initiator in the art, and the reaction temperature is related to the type of monomers, which can be determined through a conventional experiment. In one embodiment of the present invention, the initiator is a peroxide, such as ammonium persulfate, and the reaction temperature is 60 to 80°C.

During the polymerization of the polymer latex particle, an emulsifier needs to be added, and any emulsifier commonly used in the art is applicable to the present invention. In a specific embodiment, the emulsifier is at least one of sodium dodecyl sulfate, sodium dodecyl sulfonate, Span, OP-10, sodium dodecyl benzene sulfonate, sodium stearate, SR-10, and Tween 80.

During the polymerization of the polymer latex particle, an emulsifier needs to be added, and any emulsifier commonly used in the art is applicable to the present invention. In a specific embodiment, the emulsifier is at least one of an alkyl anionic emulsifier, such as sodium dodecyl sulfate, sodium dodecyl sulfonate, sodium dodecyl benzene sulfonate, or sodium stearate; a nonionic emulsifier, such as the Span series or Tween 80; an alkylphenol polyoxyethylene ether emulsifier, such as OP-10; and a reactive emulsifier, such as SR-10.

In the present invention, OP-10 is dodecylphenol polyoxyethylene ether, which is a commonly used emulsifier and is commercially available.

SR-10 is allyloxy isomer alcohol ether sulfate ammonium salt, which is a commonly used reactive emulsifier and is commercially available.

The amount of the emulsifier can be a conventional amount in the art, and will not be described in detail herein.

The water-based positive electrode edge coating adhesive of the present invention can be used in positive electrode plate edge coating, has good adhesion to aluminum foil, and a certain toughness, and has no foil exposure after 180° folding. Moreover, the adhesive of the present invention is not prone to peeling off after wiping following electrolyte immersion.

The positive electrode plate edge coating slurry of the present invention comprises a ceramic material and a binder, wherein the binder is the water-based positive electrode edge coating adhesive according to the present invention.

In some specific embodiments, the ceramic material is selected from at least one of alumina, boehmite, magnesium oxide, and magnesium hydroxide.

The specific embodiments of the present invention are further described below with reference to examples, but the present invention is not therefore limited to the scope of the examples.

### Examples 1-15

1. An acrylic monomer, an acrylamide monomer, and a hydroxyalkyl acrylate were mixed to form mixed dropping liquid A;
2. A double-bonded monomer, a crosslinking monomer, an emulsifier, and water were mixed to form mixed dropping liquid B;
3. 15 g of ammonium persulfate was prepared into 75 g of a 20% distilled water solution;
4. 2250 g of distilled water was added to a 5000 mL four-necked flask, purged with nitrogen for 15 min, then heated to 65°C;
5. When the temperature of the liquid in the four-neck flask reached 65°C, 9.375 g of the 20% ammonium persulfate solution was added, the mixed dropping liquid A was simultaneously added dropwise using a constant-pressure dropping funnel, and the addition was controlled to complete within 8 hours;
6. After the mixed dropping liquid A had been dropwise added for 6 hours, the mixed dropping liquid B was started to be added dropwise, the addition was controlled to complete within 4 hours, and after the addition was completed, the temperature was held for 8 hours to terminate the reaction, followed by dilution with water, a 30 wt% water-based positive electrode edge coating adhesive was obtained.

The types and amounts of the polymerization monomers for each example are shown in Table 1.

**Table 1**

| No. | Acrylic monomer | Acrylamide monomer | Hydroxyalkyl acrylate monomer | Double-bonded monomer | Crosslinking monomer | Emuls ifier |
|---|---|---|---|---|---|---|
| Example 1 | 450 g acrylic acid + 120 g methacryl ic acid | 30 g acrylamide | 150 g hydroxyethyl acrylate | 300 g n-butyl acrylate + 200 g iso-octyl acrylate | 3.5 g ethylene glycol dimethacrylate | 5 g sodiu m dodec yl sulfate |
| Example 2 | 187.5 g allyloxy-hydroxyp ropyl sulfonic acid | 62.5 g methacrylamide | 62.5 g hydroxypropyl acrylate | 468.75 g lauryl methacryl ate + 468.75 g p-fluorostyr ene | 6.5 g ethylene glycol diacrylate | 9.5 g Span 80 |
| Example 3 | 262.5 g vinyl sulfonic acid | 87.5 g N-methylacrylami de | 87.5 g hydroxyethyl methacrylate | 406.25 g stearyl methacryl ate + 406.25 g methylsty rene | 6 g allyl methacrylate | 8 g SR-10 |
| Example 4 | 337.5 g 2-propenyla mino-2-methylpr opanesulf onic acid | 112.5 g N-ethylacrylamide | 112.5 g hydroxypropyl methacrylate | 343.75 g methyl acrylate + 343.75 g m-fluorostyr ene | 4.8 g allyl acrylate | 7 g Span 80 |
| Example 5 | 570 g allyl sulfonic acid | 30 g N,N-dimethylacryla mide | 150 g 2-hydroxy-3-phenoxypropyl acrylate | 250 g ethyl acrylate + 250 g o-fluorostyr ene | 3.5 g N,N-methylenebisacryl amide | 5 g sodiu m dodec yl sulfon ate |
| Example 6 | 570 g methallyl sulfonic acid | 30 g N,N-diethylacrylami de | 150 g 3-(4-hydroxypheno xy)propyl acrylate | 250 g tert-butyl acrylate + 250 g p-methoxys tyrene | 3.5 g N,N'-methylenebismeth acrylamide | 5 g OP-10 |
| Example 7 | 570 g itaconic acid | 30 g 2-methylacrylami de | 150 g 3-(perfluoro-3-methylbutyl)-2-hydroxypropyl acrylate | 250 g acylate,2-ethylhexy l acrylate + 250 g o-methylsty rene | 3.5 g ethylene glycol dimethacrylate | 5 g sodiu m dodec yl benze ne sulfon ate |
| Example 8 | 570 g maleic acid | 30 g N-hydroxymethyla crylamide | 150 g 3-perfluorooctyl-2-hydroxypropyl acrylate | 250 g cyclohex yl acrylate + 250 g lauryl methacryl ate | 3.5 g ethylene glycol dimethacrylate | 5 g Tween 80 |
| Example 9 | 450 g allyl sulfonic acid + 120 g maleic acid | 30 g N-hydroxyethylacr ylamide | 150 g hydroxyethyl methacrylate | 250 g isobornyl acrylate + 250 g stearyl methacryl ate | 3.5 g ethylene glycol dimethacrylate | 5 g sodiu m dodec yl benze ne sulfon ate |
| Example 10 | 450 g acrylic acid + 120 g itaconic acid | 30 g N-hydroxypropyla crylamide | 150 g hydroxyethyl acrylate | 250 g isobornyl methacryl ate + 250 g epoxypro pyl methacryl ate | 3.5 g ethylene glycol dimethacrylate | 5 g Tween 80 |
| Example 11 | 150 g acrylic acid + 40 g itaconic acid | 10 g methacrylamide | 50 g hydroxyethyl acrylate | 500 g n-butyl acrylate + 500 g iso-octyl acrylate | 7 g ethylene glycol dimethacrylate | 10 g sodiu m dodec yl benze ne sulfon ate |
| Example 12 | 375 g acrylic acid + 100 g itaconic acid | 25 g methacrylamide | 125 g hydroxyethyl acrylate | 312.5 g n-butyl acrylate + 312.5 g iso-octyl acrylate | 4.375 g ethylene glycol dimethacrylate | 6.25 g SR-10 |
| Example 13 | 150 g maleic acid + 75 g methacryl ic acid | 75 g acrylamide | 450 g hydroxyethyl methacrylate | 250 g n-butyl acrylate + 250 g iso-octyl acrylate | 3.5 g ethylene glycol dimethacrylate | 5 g sodiu m stearat e |
| Example 14 | 600 g acrylic acid + 75 g maleic acid | 7.5 g methacrylamide | 217.5 g hydroxyethyl methacrylate | 125 g n-butyl acrylate + 125 g iso-octyl acrylate | 3.5 g ethylene glycol dimethacrylate | 5 g SR-10 |
| Example 15 | 270 g maleic acid + 80 g methacryl ic acid | 7.5 g acrylamide | 225 g hydroxyethyl acrylate | 250 g n-butyl acrylate + 250 g iso-octyl acrylate | 3.5 g ethylene glycol dimethacrylate | 5 g sodiu m stearat e |

### Comparative Examples 1-6

1. An acrylic monomer, an acrylamide monomer, and a hydroxyalkyl acrylate were mixed to form mixed dropping liquid A;
2. A double-bonded monomer, a crosslinking monomer, an emulsifier, and water were mixed to form mixed dropping liquid B;
3. 15 g of ammonium persulfate was prepared into 75 g of a 20% distilled water solution;
4. 2250 g of distilled water was added to a 5000 mL four-necked flask, purged with nitrogen for 15 min, then heated to 65°C;
5. When the temperature of the liquid in the four-neck flask reached 65°C, 9.375 g of the 20% ammonium persulfate solution was added, the mixed dropping liquid A was simultaneously added dropwise using a constant-pressure dropping funnel, and the addition was controlled to complete within 8 hours;
6. After the mixed dropping liquid A had been dropwise added for 6 hours, the mixed dropping liquid B was started to be added dropwise, the addition was controlled to complete within 4 hours, and after the addition was completed, the temperature was held for 8 hours to terminate the reaction, followed by dilution with water, a 30 wt% water-based positive electrode edge coating adhesive was obtained.

### Comparative Example 7

1. An acrylic monomer, an acrylamide monomer, and a hydroxyalkyl acrylate were mixed to form mixed dropping liquid A;
2. A double-bonded monomer, a crosslinking monomer, an emulsifier, and water were mixed to form mixed dropping liquid B;
3. 15 g of ammonium persulfate was prepared into 75 g of a 20% distilled water solution;
4. Adding 1125 g of distilled water to a 5000 mL four-necked flask, purging with nitrogen for 15 min, then heating to 65°C;
5. When the temperature of the liquid in the four-neck flask reached 65°C, 9.375 g of the 20% ammonium persulfate solution was added, the mixed dropping liquid A was simultaneously added dropwise using a constant-pressure dropping funnel, and the addition was controlled to complete within 8 hours;
6. 1125 g of distilled water was added to another 5000 mL four-necked flask, purged with nitrogen for 15 min, then heated to 65°C; when the temperature of the liquid in the four-neck flask reached 65°C, 9.375 g of the 20% ammonium persulfate solution was added, the mixed dropping liquid B was simultaneously added dropwise using a constant-pressure dropping funnel, and the addition was controlled to complete within 8 hours;
7. After the reactions in the two reaction flasks had been completed, the liquids in the two flasks were blended, and the solid content was adjusted to 30%, thereby obtaining the water-based positive electrode adhesive.

The types and amounts of the polymerization monomers for each comparative example are shown in Table 2.

**Table 2**

| No. | Acrylic monome r | Acrylam ide monome r | Hydroxyal kyl acrylate monomer | Double-bonded monomer | Crosslinkin g monomer | Emulsif ier |
|---|---|---|---|---|---|---|
| Comparat ive Example 1 | 562.5 g acrylic acid + 150 g methacry lic acid | 37.5 g acrylami de | None | 250 g n-butyl methacrylat e + 250 g iso-octyl acrylate | 3.5 g ethylene glycol dimethacry late | 5 g sodium dodecyl benzene sulfonat e |
| Comparat ive Example 2 | 450 g acrylic acid + 120 g methacry lic acid | 30 g acrylami de | 150 g hydroxyet hyl acrylate | 250 g n-butyl methacrylat e + 250 g iso-octyl acrylate | None | 5 g SR-10 |
| Comparat ive Example 3 | 562.5 g acrylic acid + 150 g methacry lic acid | 37.5 g acrylami de | None | 250 g n-butyl methacrylat e + 250 g iso-octyl acrylate | None | 5 g sodium dodecyl benzene sulfonat e |
| Comparat ive Example 4 | 720 g acrylic acid + 192 g methacry lic acid | 48 g acrylami de | 240 g hydroxyet hyl acrylate | None | None | None |
| Comparat ive Example 5 | 112.5 g acrylic acid + 30 g methacry lic acid | 7.5 g acrylami de | 37.5 g hydroxyet hyl acrylate | 531.25 g n-butyl methacrylat e + 531.25 g iso-octyl acrylate | 7.4 g ethylene glycol dimethacry late | 10.5 g sodium stearate |
| Comparat ive Example 6 | 637.5 g acrylic acid + 170 g methacry lic acid | 42.5 g acrylami de | 212.5 g hydroxyet hyl acrylate | 93.75 g n-butyl methacrylat e + 93.75 g iso-octyl acrylate | 1.3 g ethylene glycol dimethacry late | 1.8 g SR-10 |
| Comparat ive Example 7 | 270 g maleic acid + 80 g methacry lic acid | 7.5 g acrylami de | 225 g hydroxyet hyl acrylate | 250 g n-butyl acrylate + 250 g iso-octyl acrylate | 3.5 g ethylene glycol dimethacry late | 5 g sodium stearate |

The properties of the water-based positive electrode edge coating adhesive samples obtained in the above examples and comparative examples were measured.

The solid content of each sample was adjusted to 30% ± 1%. The solid content was measured using an LHS16-A rapid moisture analyzer, with the program set to "115°C, 70 s automatic" and a sample amount of 3.5 g ± 0.5 g.

Viscosity test: The viscosity was measured at a controlled temperature of 25°C using Brookfield 62# at 30 rpm.

The results of the examples and comparative examples are shown in Table 3.

**Table 3**

| No. | Solid content (%) | Viscosity (cp) | No. | Solid content (%) | Viscosity (cp) |
|---|---|---|---|---|---|
| Example 1 | 30 | 200 | Example 12 | 30 | 400 |
| Example 2 | 30 | 4400 | Example 13 | 30 | 6700 |
| Example 3 | 30 | 90 | Example 14 | 30 | 900 |
| Example 4 | 30 | 86 | Example 15 | 30 | 450 |
| Example 5 | 30 | 350 | Comparative Example 1 | 30 | 250 |
| Example 6 | 30 | 3300 | Comparative Example 2 | 30 | 320 |
| Example 7 | 30 | 750 | Comparative Example 3 | 30 | 450 |
| Example 8 | 30 | 250 | Comparative Example 4 | 30 | 780 |
| Example 9 | 30 | 300 | Comparative Example 5 | 30 | 400 |
| Example 10 | 30 | 9000 | Comparative Example 6 | 30 | 450 |
| Example 11 | 30 | 500 | Comparative Example 7 | 30 | 600 |

### Test Example 1

The water-based positive electrode edge coating adhesive obtained in the above examples and comparative examples was used in positive electrode edge coating.

### Preparation of slurry:

Slurry formulation: 45% water-based positive electrode edge coating adhesive + 55% boehmite
Slurry solid content: 30%
Slurry mixing process: 1. 500 g of the water-based positive electrode edge coating adhesive and 350 g of water were added to a 1 L beaker, and dispersed with a high-speed mixer at 300 r/min for 15 min; 2. then 150 g of boehmite was slowly added to the beaker, taking care to avoid splashing, and as the boehmite was being added, the rotation speed was gradually increased to 1000 r/min; 3. the mixture was kept stirring at 1000 r/min for 4 hours, and then filtered through a 500-mesh filter cloth to obtain a slurry.

### Slurry testing and coating process:

1. The viscosity of the slurry was measured at a controlled temperature of 25°C using Brookfield 62# at 30 rpm, with a viscosity of ≤500 cp being considered acceptable;
2. The slurry was coated onto an aluminum foil current collector using a gravure coater, and after coating, the coated foil was baked at 80-100°C for 5 min to obtain an electrode plate, with the coating thickness controlled at 4 µm ± 1 µm;
3. The electrode plate was folded 180° in an environment with a humidity of 15%, and it was observed whether the foil was exposed;
4. Adhesion to aluminum foil: The adhesion to the aluminum foil was tested using double-sided tape (3M non-woven fabric double-sided tape, 5 cm in width), the electrode plate was cut into 4 cm wide strips, which were adhered to the double-sided tape, and rolled back and forth once with a 2 kg weight roller, then, the strips were pulled at a speed of 2 cm/min, the reading on the force sensor was recorded, and the adhesion to the aluminum foil (N/m) was calculated by multiplying the reading by 25;
5. The electrode plate was immersed in 12663-type electrolyte (1 M LiPF₆ in EC:DMC:DEC = 1:1:1 (wt%)) at 70°C for 3 days, and after removal, the surface was wiped with a cotton swab to observe whether the coating had fallen off. The adhesion to the aluminum foil after immersion was also tested using the double-sided tape (the test method was the same as above).

The test results are shown in Table 4.

**Table 4**

| No. | Slurry viscosity (cp) | Coating thickness (µm) | Adhesion to aluminum foil before electrolyte immersion (N/m) | 180° folding result | Wiping following electrolyte immersion | Adhesion to aluminum foil after electrolyte immersion (N/m) |
|---|---|---|---|---|---|---|
| Example 1 | 200 | 4 | / | No foil exposure | ☆☆☆☆ | / |
| Example 2 | 190 | 4 | 180 | No foil exposure | ☆☆☆ | / |
| Example 3 | 350 | 4 | / | No foil exposure | ☆☆☆ | / |
| Example 4 | 320 | 4 | / | No foil exposure | ☆☆☆☆ | / |
| Example 5 | 180 | 4 | / | No foil exposure | **** | / |
| Example 6 | 150 | 4 | / | No foil exposure | ☆☆☆☆ | / |
| Example 7 | 220 | 4 | / | No foil exposure | **** | / |
| Example 8 | 220 | 4 | / | No foil exposure | ☆☆☆☆ | / |
| Example 9 | 180 | 4 | / | No foil exposure | ☆☆☆☆ | / |
| Example 10 | 210 | 4 | / | No foil exposure | **** | / |
| Example 11 | 250 | 4 | 120 | No foil exposure | ☆☆ | / |
| Example 12 | 340 | 4 | / | No foil exposure | **** | / |
| Example 13 | 450 | 4 | / | No foil exposure | ☆☆☆☆ | / |
| Example 14 | 180 | 4 | / | No foil exposure | **** | / |
| Example 15 | 170 | 4 | / | No foil exposure | **** | / |
| Comparative Example 1 | 420 | 4 | 3.5 | No foil exposure | ☆ | 1 |
| Comparative Example 2 | 220 | 4 | 4.5 | No foil exposure | ☆ | 2 |
| Comparative Example 3 | 182 | 4 | 50 | No foil exposure | ☆ | 30 |
| Comparative Example 4 | 135 | 4 | 80 | Foil exposure | ☆ | 50 |
| Comparative Example 5 | 131 | 4 | 10 | No foil exposure | ☆ | 5 |
| Comparative Example 6 | 130 | 4 | 82 | Foil exposure | ☆ | 50 |
| Comparative Example 7 | 140 | 4 | 15 | No foil exposure | ☆ | 5 |

| | | | | | | |
|---|---|---|---|---|---|---|
| Note: ☆ for foil exposure after 1 to 10 wipes, ☆☆ for foil exposure after 11 to 100 wipes, ☆☆☆ for foil exposure after 101 to 200 wipes, ☆☆☆☆ for no foil exposure after 200 wipes, "/" indicates that the adhesion was greater than 200 N/m, and the double-sided tape cannot be peeled off from the coating. | | | | | | |

It can be seen that the water-based positive electrode edge coating adhesive of the present invention has good adhesion to aluminum foil, and a certain toughness, and has no foil exposure after 180° folding. Moreover, the adhesive of the present invention is not prone to peeling off after wiping following electrolyte immersion, and can be used in positive electrode plate edge coating.

## Claims

1. A water-based positive electrode edge coating adhesive, comprising a graft polymer, wherein the graft polymer has an acrylic polymer as a main chain and is grafted with a polymer latex particle, and the polymer latex particle has a weight percentage of 20% to 80% in the graft polymer,
polymerization monomers of the acrylic polymer comprise an acrylic monomer, an acrylamide monomer, and a hydroxyalkyl acrylate monomer; and
polymerization monomers of the polymer latex particle comprise a crosslinking monomer and a double-bonded monomer, wherein the double-bonded monomer comprises at least one of an alkyl (meth)acrylate, styrene, p-fluorostyrene, methylstyrene, m-fluorostyrene, o-fluorostyrene, p-methoxystyrene, o-methylstyrene, p-methylstyrene, acrylonitrile, and methacrylonitrile.

2. The water-based positive electrode edge coating adhesive according to claim 1, **characterized in that** the polymer latex particle has the weight percentage of 20% to 50% in the graft polymer.

3. The water-based positive electrode edge coating adhesive according to claim 2, **characterized in that** the polymer latex particle has the weight percentage of 30% in the graft polymer.

4. The water-based positive electrode edge coating adhesive according to claim 1, **characterized in that** the acrylic monomer comprises at least one of acrylic acid, methacrylic acid, allyloxy-hydroxypropyl sulfonic acid, vinyl sulfonic acid, 2-propenylamino-2-methylpropanesulfonic acid, allyl sulfonic acid, methallyl sulfonic acid, itaconic acid, and maleic acid;
the acrylamide monomer comprises at least one of acrylamide, methacrylamide, N-methylacrylamide, N-ethylacrylamide, N,N-dimethylacrylamide, N,N-diethylacrylamide, 2-methylacrylamide, N-hydroxymethylacrylamide, N-hydroxyethylacrylamide, and N-hydroxypropylacrylamide;
the hydroxyalkyl acrylate monomer comprises at least one of hydroxyethyl acrylate, hydroxypropyl acrylate, hydroxyethyl methacrylate, hydroxypropyl methacrylate, 2-hydroxy-3-phenoxypropyl acrylate, 3-(4-hydroxyphenoxy)propyl acrylate, 3-(perfluoro-3-methylbutyl)-2-hydroxypropyl acrylate, and 3-perfluorooctyl-2-hydroxypropyl acrylate;
the crosslinking monomer comprises at least one of ethylene glycol dimethacrylate, ethylene glycol diacrylate, allyl methacrylate, allyl acrylate, N,N-methylenebisacrylamide, and N,N'-methylenebismethacrylamide;
the alkyl (meth)acrylate comprises at least one of n-butyl acrylate, n-butyl methacrylate, n-octyl acrylate, iso-octyl acrylate, lauryl methacrylate, lauryl acrylate, stearyl methacrylate, stearyl acrylate, methyl acrylate, ethyl acrylate, n-butyl acrylate, tert-butyl acrylate, 2-ethylhexyl acrylate, cyclohexyl acrylate, isobornyl acrylate, vinyl acetate, methyl methacrylate, ethyl methacrylate, n-butyl methacrylate, 2-ethylhexyl methacrylate, cyclohexyl methacrylate, isobornyl methacrylate, epoxypropyl methacrylate, and glycidyl methacrylate.

5. The water-based positive electrode edge coating adhesive according to claim 1, **characterized in that** a weight ratio of the acrylic monomer, the acrylamide monomer, and the hydroxyalkyl acrylate monomer is 15-70:1-10:10-30.

6. The water-based positive electrode edge coating adhesive according to claim 5, **characterized in that** the weight ratio of the acrylic monomer, the acrylamide monomer, and the hydroxyalkyl acrylate monomer is 30-70:1-10:10-20.

7. The water-based positive electrode edge coating adhesive according to claim 6, **characterized in that** the weight ratio of the acrylic monomer, the acrylamide monomer, and the hydroxyalkyl acrylate monomer is 57:3:15.

8. The water-based positive electrode edge coating adhesive according to any one of claims 1 to 7, further comprising a solvent, and the solvent being water.

9. The water-based positive electrode edge coating adhesive according to claim 8, **characterized in that** calculated on a solid content of 30%, a viscosity measured at 25°C is 80 to 10,000 cp.

10. Use of the water-based positive electrode edge coating adhesive according to any one of claims 1 to 9 in edge coating of a positive electrode plate.

11. A positive electrode plate edge coating slurry, comprising a ceramic material and a binder, wherein the binder is the water-based positive electrode edge coating adhesive according to any one of claims 1 to 9.

12. The positive electrode plate edge coating slurry according to claim 11, **characterized in that** the ceramic material is selected from at least one of alumina, boehmite, magnesium oxide, and magnesium hydroxide.
